Europäisches Patentamt

(19) European Patent Office

Office européen des brevets

(11) Numéro de publication: **0 282 387**
**A1**

(12) # DEMANDE DE BREVET EUROPEEN

(21) Numéro de dépôt: **88400404.5**

(22) Date de dépôt: **23.02.88**

(51) Int. Cl.⁴: **F 16 H 5/40**

(30) Priorité: **24.02.87 FR 8702374**

(43) Date de publication de la demande:
**14.09.88 Bulletin 88/37**

(84) Etats contractants désignés: **DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Goujard, Bertrand**
**47, avenue du Docteur Netter**
**F-75012 Paris (FR)**

**Mathiolon, Henri**
**43, rue Henri de Régnier**
**F-78000 Versailles (FR)**

(74) Mandataire: **Chassagnon, Jean Alain et al**
**8/10, avenue Emile Zola**
**F-92109 Boulogne-Billancourt (FR)**

(54) **Procédé de commande de passage de rapport d'une boîte de vitesses.**

(57) Procédé de commande de passage de rapports d'une boîte de vitesse caractérisé en ce qu'il lit de façon permanente la position angulaire $\theta$ de l'accélérateur (mesurée en partant de la position pied levé), cette position angulaire $\theta$ étant dérivée en permanence par rapport au temps pour avoir $\dot{\theta}$ afin de servir de base au calcul d'une moyenne $\dot{\theta}$ moy de la vitesse de déplacement de la pédale d'accélérateur et d'un écart type $\sigma$ par rapport à cette valeur moyenne $\dot{\theta}$ moy, ces deux valeurs $\dot{\theta}$ moy et $\sigma$ étant réactualisées en permanence, de manière à servir au calcul de valeurs de seuil qui seront comparées à la valeur instantanée de $\dot{\theta}$ de façon à déclencher le passage du rapport voisin.

FIG.1

EP 0 282 387 A1

## Description

### PROCEDE DE COMMANDE DE PASSAGE DE RAPPORT D'UNE BOITE DE VITESSES

La présente invention se rapporte à un procédé de commande de passage de rapport d'une boîte de vitesses qui s'applique notamment sur une boîte de vitesses manuelle automatisée.

Le système de la boîte de vitesses manuelle automatisée consiste en l'adaptation d'un automate sur la chaîne cinématique classique d'un véhicule qui, grâce à des actionneurs disposés sur la boîte de vitesse, l'embrayage et le carburateur, assure le choix permanent du rapport, le passage d'un rapport à l'autre et le patinage en première au démarrage.

Le passage d'un rapport à l'autre est décidé :

- ou bien indépendamment du conducteur selon des lois conservées dans la mémoire du calculateur comme dans le cas d'une boîte automatique classique, ceci présente des difficultés du fait de la rupture de couple (due à l'ouverture de l'embrayage) qui est directement ressentie par le conducteur à travers l'accélération longitudinale du véhicule (phénomène qui n'existe pas sur les BVA) et qui peut avoir sur lui, dans certains situations, un effet psychologique assez négatif du fait de son effet de surprise,

- ou bien par le conducteur lui-même, à travers un levier de position à contacteurs, un double contact sur le volant, une boîte à boutons, etc. Ceci présente l'inconvénient de disposer des contracteurs supplémentaires par rapport au système initial (en plus du potentiomètre de recopie qui existe sur la pédale d'accélérateur) et une connectique appropriée avec d'éventuels réglages, etc.

Le but de la présente invention est de proposer un procédé permettant au conducteur, grâce à la seule consigne de la pédale d'accélérateur, de manifester sans ambiguïté et de façon quasi instantanée sa décision de changer de rapport, au moyen de deux séquences caractéristiques.

A cet effet, le procédé de commande de passage de rapport d'une boîte de vitesses, selon l'invention, est caractérisé en ce qu'il lit de façon permanente la position angulaire de l'accélérateur (mesurée en partant de la position pied levé), cette position angulaire étant dérivée en permanence par rapport au temps afin de servir de base au calcul d'une valeur moyenne de la vitesse de déplacement de la pédale d'accélérateur et d'un écart type par rapport à cette valeur moyenne, ces deux valeurs étant réactualisées en permanence de manière à servir au calcul de valeurs de seuil qui seront comparées à la valeur instantanée de façon à déclencher le passage du rapport voisin.

Selon un mode de réalisation de l'invention, le procédé de commande est caractérisé en ce que le passage à un rapport immédiatement supérieur s'effectue par :

- le franchissement par la valeur instantanée de la dérivée d'un seuil de valeur négative,
- le retour à la valeur 0 de la valeur isntantanée de la dérivée,
- le franchissement par la valeur instantanée de la dérivée d'un nouveau seuil de valeur négative ou positive.

Selon un mode de réalisation de l'invention, le procédé de commande est caractérisé en ce que le passage à un rapport immédiatement inférieur s'effectue par :

- le franchissement par la valeur instantanée de la dérivée d'un seuil de valeur positive,
- le retour à la valeur 0 de la valeur instantanée de la dérivée,
- le franchissement par la valeur instantanée de la dérivée d'un nouveau seuil de valeur négative ou positive.

Le procédé de commande selon l'invention présente ainsi l'avantage d'éviter tout effet psychologique néfaste sur le conducteur, en lui laissant l'initiative du passage d'un rapport voisin qui sera effectué automatiquement par la boîte de vitesses manuelle automatisée, tout en utilisant une seule mesure qui est celle de la pédale d'accélérateur.

D'autres caractéristiques et avantages de la présente invention ressortiront de la description qui suit le mode de réalisation désiré à titre d'exemples en référence aux dessins annexés sur lesquels :

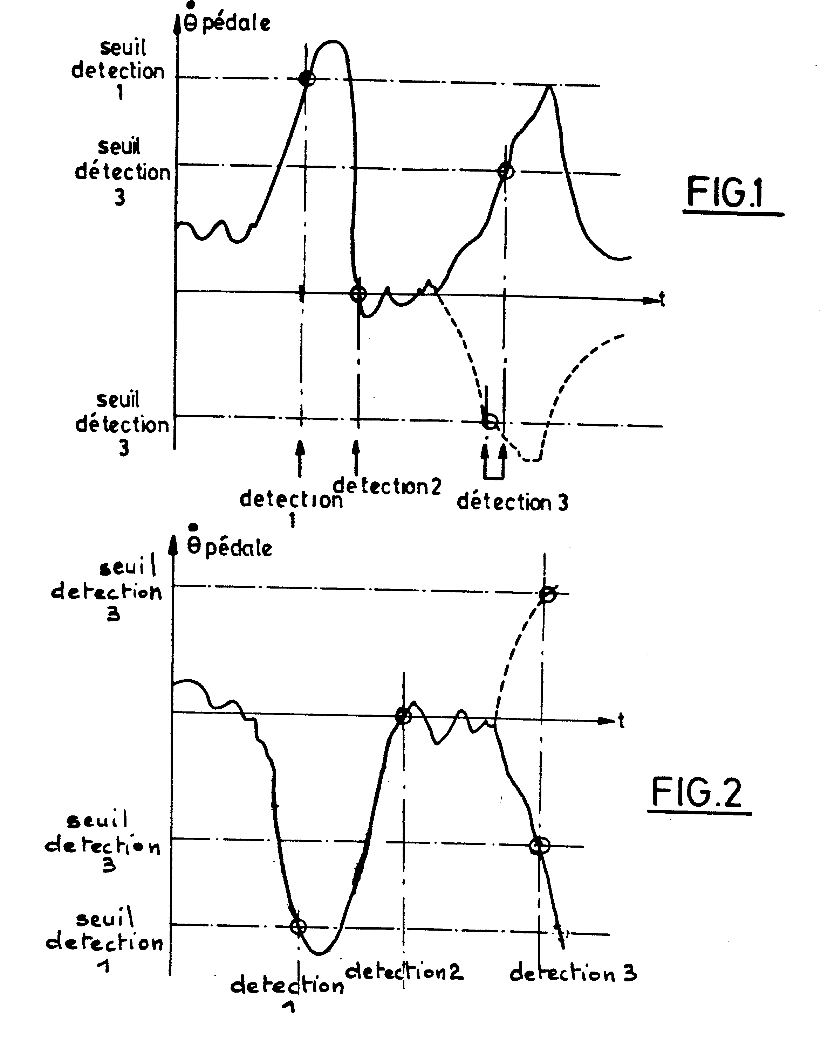

- la figure 1 est une représentation de l'évolution de la pédale d'accélérateur en fonction du temps lors de la rétrogradation,

- la figure 2 est une représentation de l'évolution de la pédale d'accélérateur en fonction du temps lors de la montée de rapport.

Le conducteur signifie sa décision par une impulsion donnée à la pédale d'accélérateur, positive dans le cas d'une rétrogradation, négative dans le cas d'une montée de rapport. Le déclenchement du passage s'effectue lorsque le conducteur relâche ou accentue de nouveau de façon sensible sa poussée sur la pédale.

L'effet de l'impulsion préalable est de limiter les risques de confusion de commande de la part du calculateur sans allonger de façon sensible le délai de déclenchement du passage, les mouvements du pied étant plus rapides qu'au cours de l'utilisation naturelle de l'accélérateur lorsqu'un rapport est engagé. Le système doit être auto-adaptatif pour assurer une bonne adéquation avec le tempérament du conducteur.

Par ailleurs, une fois cette impulsion détectée, le rapport étant présélectionné, le conducteur est libre de rejoindre la consigne de charge qu'il souhaite sur le nouveau rapport.

De plus, il convient de prévoir un système de sécurité permettant d'éviter de dépasser les régimes minimal et maximal d'utilisation normale du moteur.

Le procédé de commande selon l'invention va assurer l'auto-adaptation, afin d'accroître l'efficacité de la commande des rapport en mesurant la nervosité du conducteur par son action sur la pédale d'accélérateur, c'est-à-dire la vitesse de déplacement de l'accélérateur. Pour cela, le procédé consiste à calculer en permanence la dérivée $\dot{\theta}$ du déplacement $\theta$ de la pédale d'accélération, avec un filtre éventuel pour s'affranchir des vibrations du véhicule, et de calculer à tout instant une valeur moyenne $\dot{\theta}$ moy de cette dérivée au cours du temps.

Si le démarrage du véhicule s'effectue à l'instant t = 0, on peut calculer par exemple :

$$\dot{\theta}_{moy} = \frac{1}{T} \int_0^T |\dot{\theta}(t)| \, dt \ ,$$

qui représente la valeur moyenne $\dot{\theta}$ moy calculée après une durée d'utilisation du véhicule depuis la dernière mise sous contact égale à T.

D'autres types de moyennes peuvent être envisagés, en particulier pour prendre davantage en compte les déplacements les plus rapides de l'accélérateur, par exemple :

$$\dot{\theta}_{moy} = \frac{1}{T} \sqrt{\int_0^T [\dot{\theta}(t)]^2 \, dt}$$

Le filtre numérique utilisé pour l'évolution de cette dérivée sera conçu de sorte à éliminer les vibrations de fréquence supérieure à 10 Hz environ (due aux roues). Ceci peut être réalisé en effectuant la moyenne glissante des valeurs instantanées de $\dot{\theta}$ sur les 100 dernières millisecondes.

De plus, on calculera à tout instant l'écart type de ce signal σ qui aura pour valeur, après une durée d'utilisation du véhicule depuis la dernière mise sous contact égale à T :

$$\sigma = \sqrt{\frac{1}{T} \int_0^T \left[ |\dot{\theta}(t)| - \dot{\theta}_{moy} \right]^2 \, dt}$$

$$\sigma = \sqrt{\frac{1}{T} \sqrt{\int_0^T \left( |\dot{\theta}(t)| - \dot{\theta}_{moy} \right)^4 \, dt}}$$

A partir de cette valeur moyenne et de cet écart type constamment réactualisés, on définit à tout instant des seuils de valeur de $\dot{\theta}$ qui permettront d'identifier, sans ambiguïté, la volonté du conducteur, par le repérage de la séquence suivante dans les variations de $\dot{\theta}$ .

La séquence en montée de rapport est :

1°) Franchissement d'un seuil négatif (point 1) préalablement défini en fonction de $\dot{\theta}$ moy et de σ, par exemple $-(\dot{\theta}$ moy $+ n\sigma.)$, qui correspond à une action rapide sur l'accélérateur, n étant un nombre positif préalablement défini, ici n = 3/2.

2°) Retour au zéro (point 2)

3°) Franchissement d'un nouveau seuil (point 3) choisi légèrement inférieur au précédent en valeur absolue, par exemple $\dot{\theta}$ moy + n′ σ avec n′ nombre positif préalablement défini tel que n′ < n, ici n′ = 1/2 . Ce seuil peut être positif ou négatif permettant ainsi au conducteur de demander sur le nouveau rapport la charge qu'il désire. Toutefois, le mouvement doit rester assez brusque pour que la commande soit confirmée.

La séquence en descente de rapport est :

1°) Franchissement d'un seuil positif (point 1) égal en valeur absolue au seuil précédent, par exemple ( $\dot{\theta}$ moy + 3/2σ).

2°) Retour au zéro (point 2).

3°) Franchissement d'un nouveau seuil de façon identique à la montée de rapport (point 3).

La commande de passage s'effectue donc en deux temps :

- Indication par une impulsion positive pour la rétrogradation, négative pour la montée de rapport, de la décision du conducteur.
- Validation par une nouvelle action rapide sur l'accélérateur.

Les deux intervalles de temps entre ces trois détections doivent être relativement réduits, de l'ordre de 2 à 3 dixièmes de seconde jusqu'à 0,5 seconde au maximum. Ces intervalles de temps seront également définis à partir de la nervosité du conducteur. Ils devront être d'autant plus courts que la valeur de $\dot{\theta}$ moy sera importante.

Il est très important que cette commande soit compatible avec la rétrogradation pied à fond et que le procédé prenne en compte le réflexe du conducteur d'écraser la pédale en cas de besoin.

Donc, au cas où, à la suite de la détection 1°), on se trouve en butée à la position maximale de la pédale d'accélération (1a détection 2 va alors de soi), on considérera que l'étape 3°) est réalisée et on effectuera la rétrogradation.

## Revendications

1 - Procédé de commande de passage de rapports d'une boîte de vitesses caractérisé en ce qu'il lit de façon permanente la position angulaire $\theta$ de l'accélérateur (mesurée en partant de la position pied levé). Cette position angulaire $\theta$ étant dérivée en permanence par rapport au temps pour avoir $\dot{\theta}$ afin de servir de base au calcul d'une valeur moyenne $\dot{\theta}$ moy de la vitesse de déplacement de la pédale d'accélérateur et d'un écart type $\sigma$ par rapport à cette valeur moyenne $\dot{\theta}$ moy. Ces deux valeurs $\dot{\theta}$ moy et $\sigma$ étant réactualisées en permanence de manière à servir au calcul de valeurs de seuil qui seront comparées à la valeur instantanée de $\dot{\theta}$ de façon à déclencher le passage du rapport voisin.

2 - Procédé de commande selon la revendication 1 caractérisé en ce que le passage à un rapport immédiatement supérieur s'effectue par :
- le franchissement par la valeur instantanée de $\dot{\theta}$ d'un seuil de valeur négative,
- le retour à la valeur 0 de la valeur instantanée $\dot{\theta}$,
- le franchissement par la valeur instantanée de $\dot{\theta}$ d'un nouveau seuil de valeur négative ou positive.

3 - Procédé de commande selon la revendication 1 caractérisé en ce que le passage à un rapport immédiatement inférieur s'effectue par :
- le franchissement par la valeur instantanée de $\dot{\theta}$ d'un seuil de valeur positive,
- le retour à la valeur 0 de la valeur instantanée $\dot{\theta}$,
- le franchissement par la valeur instantanée de $\dot{\theta}$ d'un nouveau seuil de valeur négative ou positive.

4 - Procédé de commande selon l'une des revendications 2 et 3 caractérisé en ce que les valeurs de seuils calculées répondent à la relation :

$$\dot{\theta}\,moy + n.\sigma < |\,\dot{\theta}\,|$$

n étant un nombre positif préalablement défini pour chaque valeur de seuil.

5 - Procédé de commande selon la revendication 1 caractérisé en ce que la valeur moyenne moy et l'écart type $\sigma$, après une durée depuis la dernière mise sous contact égale à T, sont calculés suivant les relations :

$$\dot{\theta}\,moy = \frac{1}{T}\int_0^T |\dot{\theta}(t)|\,dt$$

$$\sigma = \frac{1}{T}\sqrt{\int_0^T \left[|\dot{\theta}(t)| - \dot{\theta}\,moy\right]^2 dt}$$

6 - Procédé de commande selon la revendication 1 caractérisé en ce que la valeur moyenne $\dot{\theta}$ moy et l'écart type $\sigma$, après une durée depuis la dernière mise sous contact égale à T, sont calculés suivant les relations :

$$\dot{\theta}_{moy} = \frac{1}{T} \sqrt{\int_0^T \left[ \dot{\theta}(t) \right]^2 dt}$$

$$\sigma = \sqrt{\frac{1}{T} \sqrt{\int_0^T \left( \left| \dot{\theta}(t) \right| - \dot{\theta}_{moy} \right)^4 dt}}$$

0282387

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | LU-A- 57 560 (S.A. AUTOMOBILE CITROEN) <br> * Page 2, lignes 17-27 * | 1 | F 16 H 5/40 |

DOMAINES TECHNIQUES RECHERCHES (Int. Cl.4)

F 16 H

Le présent rapport a été établi pour toutes les revendications

| Lieu de la recherche | Date d'achèvement de la recherche | Examinateur |
|---|---|---|
| LA HAYE | 31-05-1988 | BEERNAERT J.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)